# EUROPÄISCHE PATENTSCHRIFT

(11) **EP 0 733 457 B1**
(45) Veröffentlichungstag und Bekanntmachung des Hinweises auf die Patenterteilung: **04.06.2003**
(21) Anmeldenummer: 96103129.1
(22) Anmeldetag: 01.03.1996
(51) Int. Cl.: B29C 47/92

(54) **Mehrkomponentenextruder**
Multiple component extruder
Extrudeuse à plusieurs composants

(30) Priorität: 04.03.1995 DE 19507598
(43) Veröffentlichungstag der Anmeldung: 25.09.1996
(73) Patentinhaber: Uniroyal Englebert Reifen GmbH, D-52005 Aachen (DE)
(72) Erfinder: Anders, Martin, Dr., D-31174 Schellerten (DE); Harms, Engelbert G.M., Dr., D-52076 Aachen (DE); Schmeitz, Axel, D-52076 Aachen (DE)
(74) Vertreter: Schneider, Egon

(56) Entgegenhaltungen:
- DE-A- 3 434 904
- DE-A- 3 534 734
- US-A- 5 128 077

## Beschreibung

Die Erfindung betrifft einen Mehrkomponentenextruder zur Erzeugung von Mehrkomponentenprofilen aus Thermoplasten und/oder anderen strukturviskosen Werkstoffen, insbesondere für Kautschukprofile, sowie ein Verfahren zur Regulierung der Zusammensetzung eines in einem Mehrkomponentenextruder für Thermoplaste und/oder andere strukturviskose Werkstoffe durch Zusammenextrudieren zumindest zweier jeweils in Einzelextrudern des Mehrkomponentenextruders hergestellten Komponentenmasseströme erzeugten kontinuierlichen Mehrkomponentenmassestroms.

Es ist bekannt, zur Herstellung von Produkten, die aus verschiedenen Profilen bestehen, die Einzelprofilteile durch Extrusionsanlagen herzustellen. Es ist bekannt, derartige Mehrkomponentenprofile aus zusammengespritzten Einzelkomponenten mit entsprechend unterschiedlichen Werkstoffen herzustellen, wobei mehrere Einzelextruder jeweils den Massenstrom einer Komponente in einen gemeinsamen Spritzkopf fördern. In diesen befinden sich die einzelnen Formdüsen für die Einzelprofile der Einzelkomponenten. Im Spritzkopf werden die Einzelprofile zusammengeführt und bilden das aus dem Spritzkopf austretende Mehrkomponentenprofil. Wegen der Komplexität der Einstellung solcher Mehrkomponenten-Extrusionsanlagen bedarf es einer großen Erfahrung des Bedieners, die Anlage so zu betätigen, daß die Menge an Ausschuß, d.h. Profile, deren Abmaße sich nicht in der erforderlichen Toleranz befinden, möglichst gering ist. Andererseits besteht zunehmend der Wunsch nach großer Flexibilität der Anlage und nach Erhöhung der Freiheitsgrade hinsichtlich der Entwicklung und Gestalt der Mehrkomponentenprofile. Hierdurch werden zusätzliche Anforderungen an Kenntnis und Erfahrung an den Bediener gestellt.

Bei bekannten Mehrkomponentenextrusionsanlagen wird zur Überprüfung des erzielten Gesamtmassestromes aus dem erzeugten Gesamtmassestrom in regelmäßigen Abschnitten ein Profilabschnitt herausgeschnitten, geometrisch vermessen und abgewogen. Derartige Messungen erfolgen nach vorgegebenen Zeiteinheiten und liefern eine punktuelle Information über den erzeugten Gesamtmassestrom bzw. das Gesamtprofil. Beispielsweise kann der Bediener bei Ermittlung von zu geringerer Masse aus einer derartigen Messung die Information gewinnen, daß der Gesamtmassenstrom zu diesem Zeitpunkt zu gering ist bzw. das Gesamtprofil zu klein ist. Eine kontinuierliche Information über Veränderungen des Gesamtmassestroms bzw. des Gesamtprofils erhält er nicht. Jede Messung unterbricht den Materialfluß, kostet Zeit und erheblichen Aufwand und liefert lediglich eine Information über Abweichungen des Gesamtmassestroms. Stellt der Maschinenbediener bei derartigen Anlagen zu geringe Gesamtmasseströme bzw. zu kleine Gesamtprofile fest, werden die Drehzahlen der Einzelextruder gleichermaßen prozentual erhöht. Entsprechend werden die Drehzahlen aller Einzelextruder bei Ermittlung von zu hohen Masseströmen bzw. zu großen Gesamtprofilen gleichermaßen prozentual gesenkt. Von derartigen Mehrkomponenten-Extrusionsanlagen erhält der Maschinenbediener keine Information über die Abweichungen der Einzelmassenströme bzw. der Abmessungen und Gewichte der verschiedenen Einzelkomponenten und somit über die Unterschiede der Zusammensetzung des Gesamtmassestroms bzw. des Gesamtprofils. Der Maschinenbediener erhält keine Information darüber, inwieweit Abweichungen der Einzelkomponenten zur Abweichung des Gesamtmassestromes bzw. des Gesamtprofils beitragen. Bei Abweichung nur eines Einzelmassestromes von dem gewünschten Massenstrom für diese Komponente erhält der Maschinenbediener nach Nachmessen des Gesamtmassestromes oder Gesamtprofils durch Auswiegen lediglich die Information, daß sich der Gesamtmassestrom bzw. das Gesamtprofil ändert. Bei derartigen Mehrkomponenten-Extrusionsanlagen wird - wie oben bereits dargestellt - gleichermaßen die Drehzahl aller Einzelextruder verändert. Auf diese Weise wird jedoch bei ursprünglicher Abweichung nur des einen Einzelmassenstromes oder der Einzelkomponente des Gesamtprofils von Sollwerten dieser Massestrom bzw. diese Profilkomponente nicht vollständig auf ihren Sollwert verändert, aber die anderen Masseströme werden von ihrem bereits richtig eingestellten Sollwert entsprechend der gleichmäßigen durchgeführten Verstellung der Drehzahl auf einen fehlerhaften Wert ihres Massestromes bzw. Einzelkomponente verändert. Die Zusammensetzung des Mehrkomponentenmassestroms bzw. des Gesamtprofiles bleibt falsch.

Die Qualität derartiger Mehrkomponenten-Extrusionsanlagen ist aufgrund der mangelnden Sicherung der Anteile in ihrer Zusammensetzung aus den einzelnen Einzelmassenströmen reduziert.

Eine gattungsgemäße Mehrextruderanlage ist aus der DE 35 34 734 A1 bekannt. Bei dieser soll der Gesamtmassenstrom bei einer Mehrextruderanlage durch Regelungstätigkeiten bzw. Einflussnahmen auf die Einzelextruder möglichst konstant gehalten werden, wobei die Massenanteile der einzelnen Komponenten bzw. Bestandteile des extrudierten Profilstreifens untereinander und zur Gesamtmasse des Profils schon beim Anfahren der Anlage weitgehend konstant gehalten werden sollen. Ferner sollen dort die Massenanteile auch bis zum Ende und im stationären Betrieb beim Überschreiten einer zulässigen Temperatur weitgehend konstant gehalten werden. Beim Überschreiten einer zulässigen Temperatur eines einzelnen Extruders werden die Drehzahlen der übrigen Extruder abgesenkt.

Bei einer aus der DE 34 34 904 C1 bekannten Anlage werden Soll-Längenschrumpfwerte mit den Ist-Längenschrumpfwerten eines extrudierten Profilbandes verglichen, was dadurch erreicht wird, dass die Längenschrumpfwerte durch Abtasten in einer vom Extrusionskopf relativ weit entfernten Stelle abgetastet und mit dem Soll-Wert verglichen werden.

Der Erfindung liegt die Aufgabe zugrunde, einen Mehrkomponentenextruder sowie ein Verfahren zur Regelung der Zusammensetzung eines in einem Mehrkomponentenextruder durch Zusammenextrudieren zumindest zweier jeweils in den Einzelextrudern des Mehrkomponentenextruders hergestellter Komponentenmasseströme bzw. Profilkomponenten erzeugten kontinuierlichen Mehrkomponentenmassestroms bzw. Gesamtprofils zu schaffen, mit dem eine Vergleichmäßigung der Qualität des Extrusionsgutes ermöglicht wird.

Die Aufgabe wird erfindungsgemäß durch einen Mehrkomponentenextruder gemäß den Merkmalen von Anspruch 1 sowie durch das Verfahren zur Regelung der Zusammensetzung eines in einem Mehrkomponentenextruder durch Zusammenextrudieren zumindest zweier jeweils im Einzelextruder des Mehrkomponentenextruders hergestellter Komponentenmassenströme erzeugten kontinuierlichen Mehrkomponentenmassestroms bzw. Gesamtprofils gemäß den Merkmalen von Anspruch 2 gelöst.

Durch Messung des erzielten Gesamtmassestroms bzw. des Gesamtprofils beispielsweise mittels Breiten- und/oder Gewichtsmessung können durch Vergleich mit dem Sollwert für den Gesamtmassestrom oder das Gesamtprofil Abweichungen im Gesamtmassestrom bzw. am Gesamtprofil in einem für Messungen z.B. von Breiten und Gewicht leicht zugänglichen Bereich flußabwärts außerhalb des Spritzkopfes festgestellt werden. Zur Ermittlung der Veränderung der Einzelmasseströme oder Einzelkomponenten des Gesamtprofils werden qualitative Informationen hinsichtlich der gemessenen Druck- und Temperaturwerte in jedem Einzelextruder herangezogen. Eine Änderung im Einzelmassestrom geht mit veränderten Druck- und Temperaturwerten im zugehörigen Einzelextruder einher. Auch wenn die Werte für Druck und Temperatur, die in einem Einzelextruder gemessen werden, aufgrund der komplexen Vorgänge und Wechselwirkungen innerhalb eines Extruders mit vertretbarem Aufwand keine genauen Informationen darüber zulassen, um welchen Betrag sich der einzelne Massestrom geändert hat, so läßt sich doch aus der ermittelten Abweichung von Druck und Temperatur qualitativ die Aussage treffen, daß der Massestrom eines Einzelextruders sich geändert hat. Auch wenn es auf diese Weise mit überschaubarem Aufwand nicht möglich ist, nur mit Hilfe von Druck- und Temperaturwerten Masseströme der Einzelextruder exakt nachzuregeln, so ist doch in Verbindung mit dem gemessenen Gesamtmassestrom bzw. Gesamtprofil nach Ermittlung der Abweichung des Gesamtmassestromes von den Sollwerten für den Gesamtmassestrom bzw. Gesamtprofil durch Ermittlung von Temperatur- und Druckwerten innerhalb der Einzelextruder feststellbar, welcher Extruder einen veränderten Massenstrom liefert. Entsprechend dieser Information und den gemessenen Streifen- und Gewichtswerten wird die Drehzahl dieses Extruders entsprechend erhöht bzw. abgesenkt, bis der gemessene Wert für den Gesamtmassestrom bzw. das Gesamtprofil dem Sollwert für den Gesamtmassestrom bzw. Gesamtprofil entspricht. Auf diese Weise wird die Zusammensetzung des Mehrkomponentenmassestroms bzw. Gesamtprofils aus den einzelnen Teilkomponentenströmen bzw. Komponenten des Gesamtprofils mit geringem Aufwand wesentlich vergleichmäßigt. Da die Messung von Gesamtmassestrom bzw. Gesamtprofil bzw. mittels Breiten- und Gewichtsmessung, Druck und Temperatur kontinuierlich erfolgen kann, ist eine kontinuierliche Regelung und somit eine kontinuierliche Vergleichmäßigung der Zusammensetzung möglich.

Da Druckwerte innerhalb eines Extruders Abweichungen annehmen, werden bevorzugt gemittelte Druckwerte aus mehreren Meßpunkten und Druckwerte und Temperaturwerte aus verschiedenen Meßpunkten zur Überprüfung der Abweichung der einzelnen Ströme von ihrem Sollwert herangezogen. Bevorzugt werden die Druckwerte aus dem Bereich der Extruderschnecke innerhalb des Einzelextruders herangezogen und die Temperaturwerte aus dem Bereich des Spritzkopfs. Auf diese Weise ließen sich bei Versuchen besonders zuverlässige Aussagen treffen.

Bevorzugt wird der Massestrom durch eine Verstellung der Drehzahl der Einzelextruder geregelt.

Durch Abspeicherung der während der Produktion eingestellten und geregelten Drehzahlen für die Einzelextruder in Verbindung mit dem erzielten Gesamtmassestrom bzw. Gesamtprofil bei vorgegebener Zusammensetzung des Gesamtmassestroms bzw. Gesamtprofils aus den Komponenten der Einzelextruder läßt sich bei Wiederholung eines derartigen Auftrages am gleichen Mehrkomponentenextruder mit den gleichen Spritzformen unter Voreinstellung der Drehzahlen des abgespeicherten Produktionsauftrags als Anfangsdrehzahlen der Einzelextruder eine gute Qualität hinsichtlich der Zusammensetzung der einzelnen Komponenten bereits sehr früh, unmittelbar nach Beginn des neuen Produktionsprozesses ohne lange Anlaufzeiten erzielen. Auch bei diesem Produktionsprozeß wird durch Gesamtmassestrommessung bzw. Messung von Breiten und Gewicht des Gesamtprofils sowie durch Messung von Druck und Temperatur in den Einzelextrudern die Zusammensetzung der Einzelmasseströme zum Gesamtmassestrom bzw. zum Gesamtprofil geregelt. Auch die bei diesem Produktionsauftrag ermittelten geregelten Werte für die Drehzahlen werden als Sollwerte für einen nächsten gleichartigen Auftrag verwendet. Die Steuerung und Regelung erfolgen somit über ein lernfähiges System.

Durch Abspeicherung der Druck- und Temperaturwerte, die während des Produktionsprozesses in den Extrudern ermittelt werden, läßt sich bei Wiederholung eines derartigen Auftrages mit gleichen oder ähnlichen Drehzahlen und gleichen oder ähnlichen Materialien, nach Feststellung der Identität des Gesamtmassestromes mit dem gewünschten Geamtmassenstrom durch Messung der Druck- und Temperaturwerte in einem Einzelextruder überprüfen, ob deutliche Abweichungen für Druck- und Temperaturwerte gegenüber den aus den bekannten Aufträgen ermittelten Druckund Temperaturwerten bei gleichem Produktionsauftrag auftreten. Durch einen derartigen Vergleich der Druck- und Temperaturwerte kann überprüft werden, ob sich im Extruder das beabsichtigte Material befindet.

Bei Feststellung hoher Abweichungen an Druck- und Temperaturwerten, die innerhalb eines Extruders gegenüber den erwarteten Druck- und Temperaturwerten bei unverändertem konstanten Gesamtmassestrom auftreten, läßt sich durch Vergleich mit bekannten Druck- und Temperaturwerten für andere Materialien an diesem Extruder mit dem erzielten Gesamtmassestrom bei bekannter Spritzform in Näherung eine Zuordnung zu dem wirklich verarbeiteten Material treffen. Aufgrund der unterschiedlichen Viskosität und sonstigen Materialeigenschaften ergeben sich für jedes Material bei vorgegebenem Massestrom und Drehzahlen in einem mit einer bestimmten Form bestückten Extruder typische auftretende Temperatur- und Druckwertbereiche. Aufgrund dessen läßt sich zumindest bei beschränkter Auswahl der verwendeten Materialien eine Zuordnung zwischen den ermittelten Druckund Temperaturwerten innerhalb eines Einzelextruders bei erzieltem Gesamtmassestrom für den mit bekannter Form bestückten Einzelextruder zu dem Material treffen, dessen typische Druck- und Temperaturwerte den ermittelten entsprechen. Auf diese Weise kann zu Beginn eines Auftrages das zu verarbeitende Material zunächst auf seine Richtigkeit überprüft und falls abweichend von dem beabsichtigten zu verarbeitenden Material auch das tatsächlich verwendete Material bestimmt werden. Bei Identität des Materials wird dann durch kontinuierliche Massestrommessung die Konstanz des Massestroms überprüft und bei Abweichung des überprüften Gesamtmassestroms bzw. des durch Messung von Profilbreiten und Gewichten überprüften Gesamtprofils durch Feststellung von Abweichungen der Druck- und Temperaturwerte eines Einzelextruders der Einzelextruder hinsichtlich seiner Drehzahl derart nachgeregelt bis der Gesamtmassestrom mit dem Sollgesamtmassestrom bzw. Sollgesamtprofil wieder übereinstimmt. Auf diese Weise läßt sich weitgehend eine kontinuierliche automatisierbare Qualitätssicherung der Komponentenzusammensetzung eines Mehrkomponentenextruderproduktes sicherstellen.

Besonders vorteilhaft, weil einfach und zuverlässig, ist die Verwendung der am geformten Profil erreichten und gemessenen Werte für Größe und/oder Breite- und/oder Gewicht für die Regelung der Schneckendrehzahlen von Extrudern. Der Massestrom eines Einzelextruders ist proportional dem Profilgewicht und der Profilbreite. Bei Abweichung einer der beiden Größen muß durch Schneckendrehzahl- oder Anlagengeschwindigkeitsänderung mittels Steuer/Regeleinheit der Sollwert erreicht wird. Beim Mehrkomponentenprofilen wird durch entsprechend bekannte Breitenmeßverfahren die Abweichung der Einzelprofilteile überprüft und gegebenenfalls durch Schneckendrehzahländerung korrigiert.

Die Erfindung wird im folgenden anhand der in den Figuren 1 bis 3 schematisch dargestellten Mehrkomponentenextruderanlage zur Erzeugung von Laufstreifen mit Cap, Base und Schulterstreifen eines Fahrzeugluftreifens beispielhaft dargestellt. Darin zeigen
- Fig. 1: schematische Darstellung der erfindungsgemäßen Mehrkomponentenextruderanlage,
- Fig. 2: Querschnittsdarstellung des koextrudierten Laufstreifens,
- Fig. 3: Zuordnungsdiagramm zur Zuordnung ermittelter Druck- und Temperaturwerte zu bestimmten Materialien in qualitativer Darstellung.

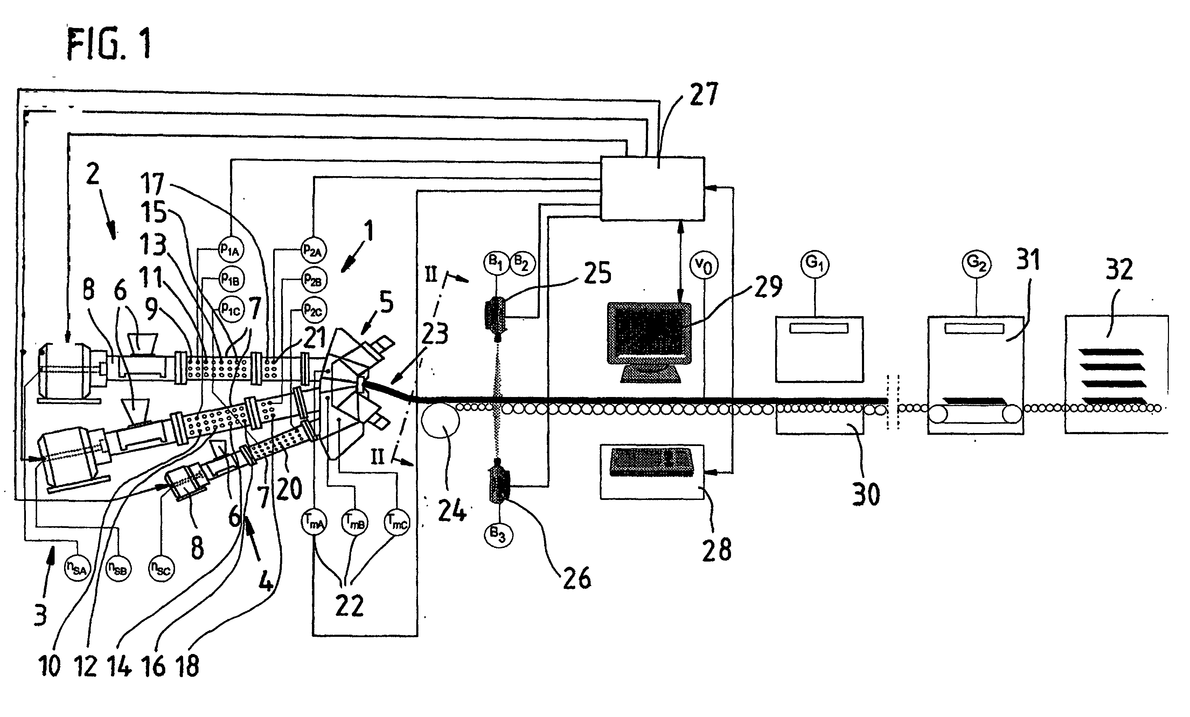

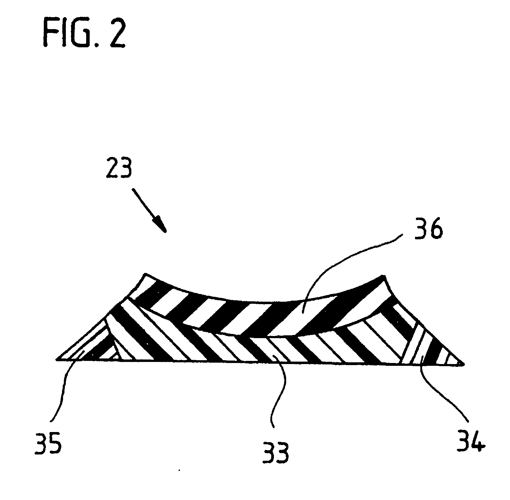

Fig. 1 zeigt einen Dreikomponentenextruder 1 bekannter Bauart mit den Einzelextrudern 2, 3, 4. Die Einzelextruder 2, 3, 4 sind in bekannter Weise als Stiftextruder, wie sie beispielsweise aus der DE-PS 31 50 719 C2 bekannt sind, aufgebaut. Sie weisen jeweils ein Gehäuse 7 auf, in der eine Extruderschnecke 8 drehbar gelagert ist und die im Bereich des Gehäuses 7 als Extruderschnecke ausgebildet ist. Durch Einfülltrichter 6 wird Kautschukmischung in das Gehäuseinnere beschickt und von der über die Antriebswelle 8 angetriebenen Extruderschnecke aus dem Bereich abgezogen, verdichtet, gemischt und homogenisiert und in einem für alle drei Einzelextruder 2, 3, 4 gemeinsamen Spritzkopf 5 durch die zum Einzelextruder gehörige, nicht dargestellte Formdüse gepreßt. Die drei durch die drei Einzelextruder 4, 3, 2 erzeugten Einzelmasseströme werden durch die Lage der Formdüsen im Spritzkopf so zusammengeführt, daß sie einen gemeinsamen Gesamtmassestrom 23 bilden. Wie in Fig. 2 dargestellt ist, wird durch den Extruder 2 die aus einer geeigneten Kautschukmischung mit für den direkten Straßenkontakt erforderlichen Materialeigenschaften versehene Cap 36, durch den Extruder 3 die darunterliegende Base als dämpfende Materialschicht und beiderseits seitlich der Base über den Extruder 4 die Schulterstreifen 34 und 35 extrudiert.

Die Extruder 2, 3 und 4 weisen in diesem Beispiel im Bereich des Gehäuses 7 zehn in Achsrichtung der Extruderachse hintereinander angeordnete Reihen von über den Umfang des Gehäuses im Gehäuse verteilt angeordneten radial nach innen zur Achse der Extruderschnecke ausgerichtete Extruderstiften gebildete zehn Stiftreihen 9 bis 18 auf. Diese Stiftreihen 9 bis 18 dienen der mechanischen und thermischen Homogenisierung der Mischung und sind in bekannter Weise im Gehäuse angeordnet. Mit Hilfe einer Abzugsrolle 24 wird der zusammengeführte Laufstreifen 23 vom Spritzkopf kontinuierlich abgezogen. In Förderrichtung nachgeordnet sind oberhalb und unterhalb des Laufstreifens Kameras 25, 26 bekannter Bauart zur Ermittlung der Breite des Laufstreifens bzw. der Einzelkomponenten des Gesamtprofils angeordnet. Die Kameras sind mit einer Steuer- bzw. Regeleinheit 27 verbunden. Im Bereich der zweiten Stiftreihe 10 und der zehnten Stiftreihe 18 sind jeweils in jedem der Extruder 2, 3 und 4 Drucksensoren 20 und 21 bekannter Bauart zur Ermittlung des Drucks im jeweiligen Extruder 2, 3, 4 angeordnet. Die Sensoren 20 und 21 eines jeden Extruders 2, 3, 4 sind in bekannter Weise mit der Steuer- und Regeleinheit 27 verbunden. Im Spritzkopf sind innerhalb jedes Einzelextruders 2, 3 und 4 jeweils Temperatursensoren 22 bekannter Bauart in bekannter Weise zur Ermittlung der Temperatur der Kautschukmischungim Düsenbereich angeordnet. Die Temperatursensoren 22 eines jeden Extruders 2, 3, 4 sind jeweils mit der Steuer- und Regeleinheit 27 in bekannter Weise verbunden.

Zu Beginn eines Extrudierauftrages werden die Werte für den gewünschten Gesamtmassestrom, sowie die jeweiligen Anfangsdrehzahlen für die Extruderschnecken 8 der einzelnen Extruder 2, 3, 4 per Hand über das Bedienungspult 28 in der Steuer- und Regeleinheit 27 sowie bekannte Werte für die Drücke P1a, P1b, P1c in der ersten Druckmeßstelle, die sich in der zweiten Stiftreihe 10 befindet, sowie für die zweiten Druckmeßwerte P2a, P2b, P2c für jeweils die zweite Druckmeßstelle, die sich in der zehnten Stiftreihe eines jeden Einzelextruders befindet, angegeben. Ebenso werden bekannte Temperaturwerte für die erwarteten auftretenden Temperaturen im Spritzkopf in den Einzelextrudern eingegeben. Nach Beschickung der Materialtrichter werden die Extruderschnecken 8 der Einzelextruder 2, 3, 4 durch die Steuer- und Regeleinheit auf die vorgegebenen Solldrehzahlen nₛₐ, n_{sb}, n_{sc} der Einzelextruder 2, 3, 4 eingestellt. Das im Spritzkopf zusammengeführte Produkt wird mit Hilfe der Abzugsrolle vom Spritzkopf abgezogen und mit Hilfe der Kameras 25, 26 in ihrer Breite vermessen. Aufgrund der ermittelten Breiten als Maß für das Volumen der Einzelkomponenten und der Abzugsgeschwindigkeit ermittelt die Steuer- und Regeleinheit den Gesamtmassestrom bzw. das Gesamtprofil im Bereich der Breitenmessung. Bei Abweichen des Gesamtmassestroms ṁ_{G} bzw. des Gesamtprofils von dem Sollwert des Gesamtmassestroms ṁ_{G} bzw. des Gesamtprofils werden die kontinuierlich gemessenen Breitenwerte sowie die Druckwerte an erster und zweiter Meßstelle in allen drei Extrudern sowie die Temperaturmeßwerte in allen drei Extrudern mit den vorgegebenen Breiten-, Druck- und Temperaturwerten verglichen. Zur Vereinheitlichung der Aussagen werden dabei gemittelte Werte für die Drücke aus den gemessenen Werten der beiden Meßstellen eines jeden Extruders ermittelt und mit gemittelten vorgegebenen Werten für den Druck verglichen. Bei Abweichungen der Breiten der Einzelkomponenten des Gesamtprofils von den vorgegebenen Breiten über einen vorgegebenen Toleranzbereich hinweg veranlaßt die Steuer- und Regeleinheit 27 eine Veränderung der Drehzahl dieses Extruders in Abhängigkeit von der ermittelten Abweichung von Druck und Temperatur von entsprechenden Sollwerten. Die Drehzahlveränderung erfolgt kontinuierlich unter ständiger Messung der Breiten mit Hilfe der Kameras 25 und 26.

Bei Übereinstimmung der gemessenen Breiten als Maß für den Massestrom mit der für den Sollmassestrom entsprechenden Breite wird die Drehzahlveränderung des Extruders gestoppt. Durch ständige Kontrolle der Breite des Massestroms als Maß für den Massestrom und Veränderungen der Drehzahl eines Extruders bei Feststellung von Abweichungen der gemessenen Druck- und Temperaturwerte für diesen Extruder nach Feststellung von Massestromänderungen ist eine ständige Regelung und konstante Erhaltung des Massestroms durch Veränderung des jeweiligen Einzelmassestroms, der zur Veränderung des Gesamtmassestroms bzw. Gesamtprofils geführt hat, möglich.

Zur Überprüfung der Gesamtmasseströme, sowie zur Überprüfung und Nachstellung der Breitenmessung als Maß für den Massestrom ist es denkbar, in den Massestrom zusätzlich eine Strangwaage 30 bekannter Bauart einzubauen. Hierdurch läßt sich aus dem aus Abzugsgeschwindigkeit und Breite unter Vernachlässigung von Höhenschwankungen zunächst nur berechenbaren Volumenstrom, und nur unter zulässiger Vernachlässigung geringer Dichteabweichungen ableitbaren Massestrom konkret unter Einbezug der Masse berechnen. Ebenso ist es denkbar, nach Schneiden des Laufstreifens in zur Verarbeitung geeignete Laufstreifenstücke eine Stückgewichtswaage 31 zur Kontrolle der ermittelten Ergebnisse einzusetzen. Weder Strangwaage 30 noch Stückgewichtswaage 31 ermöglichen eine Aussage über die Zusammensetzung der Gesamtprofile, wohl aber im Verband über das Schrumpfverhalten des Stranges. Die geschnittenen Laufstreifenstücke können in bekannter Weise in einem Lager, beispielsweise in einer Buchstation bekannter Bauart 32, gelagert werden.

Durch Speichern aller ermittelten Werte für Drehzahl, Temperatur, gemittelte Drücke für jeden Einzelextruder in Verbindung mit den verwendeten Spritzformen und Spritzmaterialien und den erzielten Gesamtmasseströmen bzw. Gesamtprofilen mit Breiten und Gewicht ist es möglich, ein umfassendes Informationsfeld für Folgeaufträge aufzubauen. Beispielsweise ist es denkbar, zu Beginn eines Extrusionsauftrages an einem bekannten Dreikomponentenextruder gemäß Fig. 1 nach Feststellung der Identität des erzielten Gesamtmassestroms durch die Kameras 25 und 26 mit den erwarteten Sollwerten für den Gesamtmassestrom bzw.

Gesamtprofilbreiten durch Vergleich der bei den eingestellten Drehzahlen ermittelten Werte für den gemittelten Druck sowie für die Temperatur in jedem Einzelextruder 2, 3, 4 mit den dort aus bekannten Vergleichswerten zu erwarteten Werten für Druck und Temperatur bei deutlichen Abweichungen innerhalb eines Extruders 2, 3, 4 bei übereinstimmender Drehzahl mit der Solldrehzahl und Identität der Düsenform im Spritzkopf mit der Solldüsenform auf Fehler hinsichtlich des beschickten Materials zu schließen. Somit kann bereits zu Beginn eines Extrusionsauftrages zumindest eine Fehlbelegung der Extruder mit falschem Material mit deutlich abweichenden Druck- und Temperaturen festgestellt, auf einem Bildschirm angezeigt,und durch Materialwechsel frühzeitig rückgängig gemacht werden.

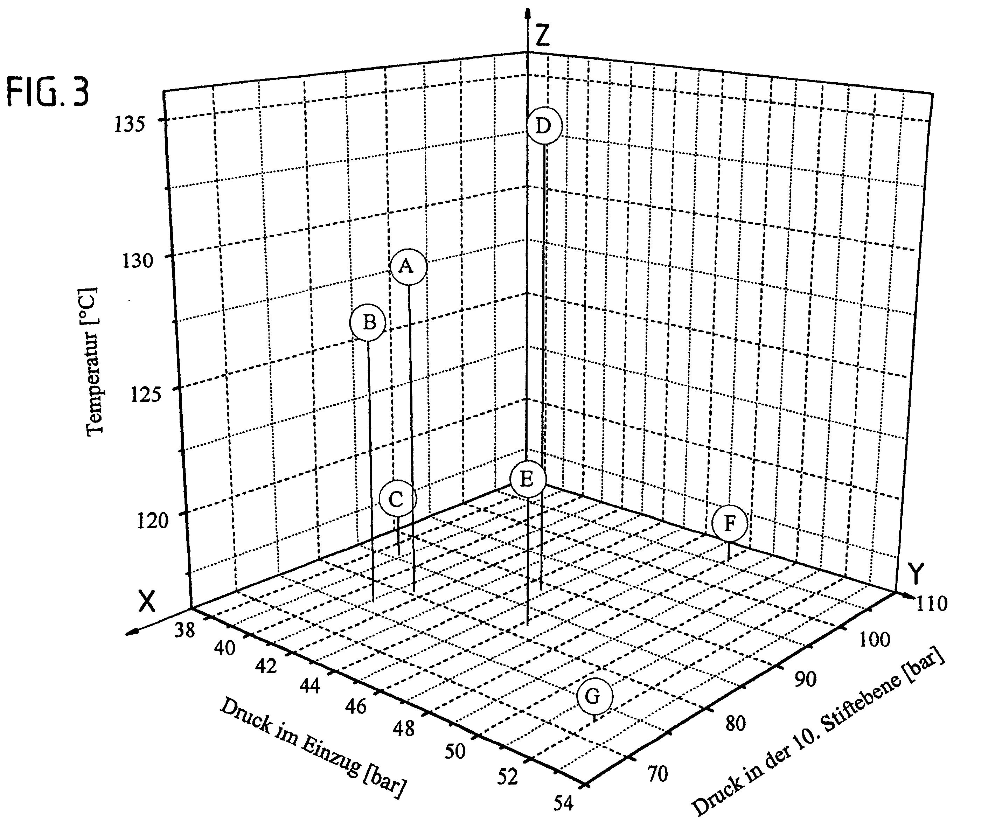

Wie in Fig. 3 als Beispiel dargestellt ist, läßt sich für jeden unterschiedlichen Auftrag für jeden Einzelextruder 2, 3, 4 in einem Raumdiagramm mit karthesischem Koordinatensystem x-y-z, wobei die x-Achse die Angaben für den Druck in der zehnten Stiftebene, die y-Achse die Druckwerte für den Druck in der zweiten Stiftebene und die z-Achse die Temperaturwerte im Spritzkopf darstellt, ein Diagramm darstellen mit fester Zuordnung verschiedener Materialien z.B. A, B, C, D, E, F, G zu typischen Bereichen innerhalb dieses Diagramms. Aufgrund dessen läßt sich nach Feststellung der fehlenden Identität eines eingegebenen Materials in einem Einzelextruder mit dem zur Verarbeitung beabsichtigten Materials überprüfen, ob die ermittelten Werte für Druck und Temperatur einem im bekannten Diagramm bereits bekannten Material zuzuordnen ist. Auf diese Weise läßt sich zumindest bei übersehbarer Zahl unterschiedlicher verwendeter Materialien auch eine sichere Zuordnung des ermittelten Materials zu einem bekannten Material treffen.

Der Mehrkomponentenextruder gemäß der Darstellung von Fig. 1 ist denkbarer Weise auch als lernfähiges System einzusetzen. Dabei können die gespeicherten Werte für die regulierten Drehzahlen der einzelnen Extruderschnecken bei vorgegebenem Auftrag die Ausgangswerte für die Drehzahlen bei vergleichbaren Folgeaufträgen sein. Es ist denkbar, die gespeicherten Drehzahlen bei identischen Aufträgen einzusetzen, um somit von Beginn des Auftrags an eine gute Qualität in der Zusammensetzung zu erreichen. Ebenso ist es denkbar bei ähnlichen Aufträgen, beispielsweise bei Aufträgen mit ähnlichen Spritzformen oder mit ähnlichen Materialien zunächst die bekannten gespeicherten geregelten Drehzahlen als näherungsweise Anfangswerte für die neuen Extrusionsaufträge einzusetzen. Selbstverständlich erfolgt über die Breitenmessung, fortschreitende Überprüfung des Gesamtmassestroms bzw. Gesamtprofils sowie eine kontinuierliche Überprüfung von Druck und Temperatur zur etwaigen Nachregelung der Drehzahl eines Einzelextruders bei Veränderung des Gesamtmassestroms.

Es ist auch denkbar, für einen bestimmten vorgegebenen Dreikomponentenextruder mit bekannten abweichenden Folgeaufträgen die Veränderungen hinsichtlich der einzustellenden Drehzahlen prozentual zur Ausgangsdrehzahl eines jeden Einzelextruders abzuspeichern, um bei vergleichbaren Folgeaufträgen die prozentualen Veränderungen hinsichtlich der geregelten Drehzahlen zwischen den einzelnen Extrusionsaufträgen eines Folgeauftrages jeweils direkt einzustellen. Beispielsweise ist es denkbar, daß ein erster Auftrag einer ersten Folge von verschiedenen Aufträgen für alle drei Extruder 2, 3 und 4 jeweils mit Solldrehzahlen nₛₐ, n_{sb}, n_{sc} einrestellt wird. Nach Veränderung der Spritzdüsenform für Extruder 2 ist in einem zweiten Auftrag dieser ersten Folge von Aufträgen für Extruder 2 eine zur Erzielung des vorgegebenen Gesamtmassestromes bzw. des Gesamtprofils erforderliche Drehzahl nₛₐ₂, die 80 % der ersten Drehzahl von nₛₐ₁ beträgt, gesteuert. Bei Wiederholgung dieser Folge von Aufträgen aus erstem Auftrag und anschließendem zweitem Auftrag wird von der Steuer- und Regeleinheit 27 zunächst für den ersten Auftrag dieser zweiten Folge die Drehzahl nₛₐ₁ = 100 % eingestellt und für den zweiten Auftrag die Drehzahl nₛₐ₂ mit 80 %.

Ebenso ist es denkbar, im Bereich der Breitenmessung und der Strangwaage 30 eine nichtdargestellte Schrumpfstation vorzusehen. Das durch die Extrusion erwärmte Produkt des Laufstreifens schrumpft beim Erkalten. Durch Vermessen des Schrumpfmaßes in der Strangwaage im Verhältnis zur Stückgewichtswaage läßt sich für jeden Auftrag das Maß der Schrumpfung ermitteln und im Steuerrechner speichern. Für vergleichbare Folgeaufträge wird das danach zu erwartende Schrumpfmaß vorgegeben und die Werte für Massestrom bzw. Profilabmessungen so ermittelt, daß das zu erwartende Schrumpfmaß als zusätzlichen Aufmaß für den Soll-Massestrom benutzt wird und somit ein über das Schrumpfmaß erhöhter Soll-Massestrom erzeugt wird.

### Bezugszeichenliste

- 1: Dreikomponenten-Extruder
- 2: Einzelextruder
- 3: Einzelextruder
- 4: Einzelextruder
- 5: Spritzkopf
- 6: Einfülltrichter
- 7: Extrudergehäuse
- 8: Extruderschnecke
- 9: erste Extruderstiftreihe
- 10: zweite Extruderstiftreihe
- 11: dritte Extruderstiftreihe
- 12: vierte Extruderstiftreihe
- 13: fünfte Extruderstiftreihe
- 14: sechste Extruderstiftreihe
- 15: siebte Extruderstiftreihe
- 16: achte Extruderstiftreihe
- 17: neunte Extruderstiftreihe
- 18: zehnte Extruderstiftreihe
- 19 20: Drucksensoren
- 21: Drucksensoren
- 22: Temperatursensoren
- 23: Laufstreifen
- 24: Abzugsrolle
- 25: Kamera
- 26: Kamera
- 27: Steuer- und Regeleinheit
- 28: Bedienungspult
- 29: Bildschirm
- 30: Strangwaage
- 31: Stückgewichtwaage
- 32: Buchstation
- 33: Base
- 34: Schulterstreifen
- 35: Schulterstreifen
- 36: Cap

## Patentansprüche

1. Mehrkomponentenextruder (1) zur Erzeugung von Mehrkomponentenprofilen (23) aus thermoplastischen und/oder anderen strukturviskosen Werkstoffen, insbesondere für Kautschukprofile, mit mindestens zwei jeweils Einzelkomponenten erzeugenden Einzelextrudern (2,3,4), die Teil des Mehrkomponentenextruders sind,
1.1 wobei jeder Einzelextruder ein Gehäuse (7) mit einem Raum zur Aufnahme von zu extrudierendem thermoplastischen und/oder anderen strukturviskosen Material aufweist, in dem eine Extruderwelle (8) drehbar gelagert ist, die mit gesteuerten Antriebsmitteln zum Drehen der Extruderschnecke in ihren Lagern zumindest bei der Extrusion in Wirkverbindung steht,
1.1.1. mit jeweils einer Extrusionsdüse, durch die bei Drehung der Extruderschnecke das zu extrudierende Material aus dem Gehäuse des Einzelextruders als kontinuierlicher Massenstrom mᵢ gepreßt und dabei profiliert wird,
1.2. wobei die Extruderdüsen der einzelnen Extruder in einem gemeinsamen Spritzkopf (5) derart angeordnet sind, daß ihre Massenströme mᵢ unter Bildung eines Mehrkomponentenprofils (23) bestehend aus den Einzelprofilen (33,34,35,36) in einem Vereinigungsbereich zu einem Gesamtmassenstrom m_{G} zusammenfließen,
1.3. mit Mitteln zur kontinuierlichen Messung des Gesamtmassenstromes m_{GMes} bzw. des Gesamtprofils flußabwärts des Vereinigungsbereichs,
1.4. mit Mitteln zur Ermittlung von Druck und Temperatur innerhalb jedes Einzelextruders,
1.5. mit einer Steuereinrichtung (27) zur unabhängigen Einstellung der Drehzahl nᵢ jedes Einzelextrudersentsprechend der vorgegebenen Sollwerte nᵢₛₒₗₗ in Abhängigkeit vom Sollwert für den Gesamtmassenstrom m_{G}, von den zu verarbeitenden Materialkomponenten und von den Extrusionsdüsen und zur Regelung der Ist-Drehzahlen n_{iᵢₛₜ} bei Feststellung von Abweichungen des gemessenen Gesamtmassenstromes m_{GMes} bzw. Gesamtprofils vom Sollwert des Gesamtmassenstromes m_{GSoll} entsprechend ermittelter Abweichungen der in den Einzelextrudern jeweils gemessenen Werte für Druck Pₘₑₛₛ und Temperatur T_{Mess} vom jeweiligen Sollwert für Druck Pₛₒₗₗ und Temperatur Tₛₒₗₗ,
1.6 wobei bei dem bei Abweichung des ermittelten Istwerts des Mehrkomponentenmassenstroms m_{G} bzw. des Gesamtprofils der Massenstrom desjenigen Einzelextruders durch kontinuierliche Drehzahlveränderung in dem die ermittelten Druck- und Temperaturwerte P_{Mes}, T_{Mes} von den Sollwerten für Druck Pₛₒₗₗ und Temperatur Tₛₒₗₗ dieses Extruders abweichen, nachgeregelt wird.

2. Verfahren zur Regulierung der Zusammensetzung eines in einen Mehrkomponentenextruder gemäß Anspruch 1 durch Zusammenextrudieren zumindest zweier jeweils in Einzelextrudern des Mehrkomponentenextruders hergestellter Komponentenmassenströme erzeugten kontinuierlichen Mehrkomponentenmassenstroms m_{G} bzw. Gesamtprofils, bei welchem bei Abweichung des durch Messung ermittelten Ist-Werts des Mehrkomponentenmassenstroms m_{G} oder Gesamtprofils der Massenstrom desjenigen Einzelextruders für die Erzeugung der Einzelprofilkomponente durch Drehzahländerung kontinuierlich nachreguliert wird, in dem gemittelte Druckwerte aus zumindest zwei Messstellen für Druck- und Temperaturwerte für zumindest eine Messstelle für Temperatur in jedem Extruder von gemittelten Soll-Werten Pₛₒₗₗ mit und von Soll-Werten Tₛₒₗₗ abweichen.

3. Verfahren gemäß den Merkmalen von Anspruch 2
- wobei die Werte für die einregulierten Drehzahlen der Einzelextruder einer Mehrkomponentenextrusionsanlage von Mehrkomponentenextrusionsaufträgen in Verbindung mit Identifikationsangaben für den Extruder, für die extrudierten Materialien und dem erzielten Mehrkomponentenmassenstrom m_{Gmess} bzw. dem Gesamtprofil gespeichert werden, und bei Beginn eines neuen Mehrkomponentenextrusionsauftrags mit gleicher Mehrkomponentenzusammensetzung und mit gleicher Verteilung der einzelnen Komponenten auf die Einzelextruder und bei zumindest im wesentlichen gleichem Mehrkomponentenmassenstrom m_{G} bzw. Gesamtprofil die abgespeicherten Werte für die Drehzahlen der Einzelextruder als Solldrehzahlen eingestellt werden.

4. Verfahren gemäß den Merkmalen von Anspruch 2 oder 3, wobei zu Beginn eines Extruderauftrags der Gesamtmassenstrom m_{Gmes} bzw. das Gesamtprofil ermittelt wird und bei Übereinstimmung mit den Sollwerten an mehreren vorgegebenen Stellen in zumindest einem Einzelextruder jeweils die Werte für Druck Pᵢₛₜ und Temperatur Tᵢₛₜ ermittelt wird undaus den ermittelten Werten für Druck gemittelte Werte für Druck Pᵢₛₜ mit berechnet werden und diese mit bekannten für das zu extrudierende Material bei der eingestellten Drehzahl dieses Extruders und bei dem eingestellten Mehrkomponentenextrusionswert erwarteten Sollwerten P_{soll Mit}, Tₛₒₗₗ verglichen werden zur Überprüfung der Identität des im Extruder tatsächlich befindlichen Materials mit dem für diesen vorgegebenen Sollmaterial.

5. Verfahren gemäß den Merkmalen von Anspruch 4, bei dem eine Zuordnung der ermittelten Werte für den gemittelten Druck P_{ist Mit} die Temperatur Tᵢₛₜ bei Identität des gemessenen Gesamtmassenstroms m_{Gist} mit dem Sollgesamtmassenstrom m_{Gsoll}, zu bereits bekannten materialtypischen Werten von gemitteltem Druck Pₘᵢₜ und bekannter Materialien in diesem Extruder bei Verwendung der im Extruder befindlichen Form zur Feststellung des im Extruder befindlichen Materials erfolgt.

6. Verfahren, insbesondere nach einem oder mehreren der Ansprüche 2 bis 5, für die Regelung der Schneckendrehzahlen für Einzelextruder, wobei der Massenstrom eines Einzelextruders bei Abweichung einer gemessenen Größe, Breite und/oder Gewicht des durch Extrusion geformten Profils durch Schneckendrehzahl oder Anlagengeschwindigkeitsänderung mittels Steuer- und/oder Regeleinheit solange verändert wird bis der Sollwert für diese Größe erreicht wird.

## Claims

1. Multi-component extruder (1) for producing multi-component profiles (23) from thermoplastic and/or other structurally viscous materials, more especially for rubber profiles, said extruder having at least two individual extruders (2, 3, 4) which each produce individual components and are part of the multi-component extruder,
1.1 wherein each individual extruder has a housing (7) with a chamber for accommodating thermoplastic and/or other structurally viscous material to be extruded, in which housing there is rotatably mounted an extruder shaft (8) which is in operative connection with controlled drive means for rotating the extruder screw in its bearings, at least during the extrusion process,
1.1.1. each extruder having an extrusion nozzle, through which the material to be extruded is pressed from the housing of the individual extruder as a continuous mass flow mᵢ, and is thereby profiled, during rotation of the extruder screw,
1.2. wherein the extruder nozzles of the individual extruders are disposed in a common injection-moulding head (5) in such a manner that their mass flows mᵢ converge at a region to become a total mass flow m_{G}, thereby forming a multi-component profile (23),
1.3. said extruder having means for continuously measuring the total mass flow m_{GMes} or respectively the total profile downstream of the junction,
1.4. said extruder having means for determining pressure and temperature internally of each individual extruder,
1.5. said extruder having a control means (27) for independently setting the rate of rotation nᵢ of each individual extruder according to the prescribed desired values nᵢₛₒₗₗ in dependence on the desired value for the total mass flow m_{G}, on the material components to be processed and on the extrusion nozzles and for regulating the actual rates of rotation nₗ if deviations are ascertained between the measured total mass flow m_{GMes} or respectively the total profile and the desired value of the total mass flow m_{Gsoll} according to determined deviations between the values respectively measured in the individual extruders for pressure Pₘₑₛₛ and temperature T_{Mess} and the particular desired value for pressure Pₛₒₗₗ and temperature Tₛₒₗₗ,
1.6. wherein, if there is a deviation in the determined actual value of the multi-component mass flow m_{G} or respectively of the total profile, the mass flow of that individual extruder, in which the determined pressure and temperature values P_{Mes}, T_{Mes} deviate from the desired values for pressure Pₛₒₗₗ and temperature Tₛₒₗₗ of this extruder, is re-adjusted by continuously changing the rate of rotation.

2. Method of regulating the composition of a continuous multi-component mass flow m_{G} or total profile respectively, which is produced in a multi-component extruder according to claim 1 by extruding together at least two respective component mass flows produced in individual extruders of the multi-component extruder, wherein, if there is a deviation in the actual value of the multi-component mass flow m_{G} or total profile determined by measurement, the mass flow of that individual extruder, in which determined pressure values from at least two measurement locations for pressure and temperature values for at least one measurement location for temperature in each extruder deviate from determined desired values P_{soll mit} and from desired values Tₛₒₗₗ, is continuously re-adjusted for producing the individual profile component by changing the rate of rotation.

3. Method according to the features of claim 2,
- wherein the values for the regulated rates of rotation of the individual extruders of a multi-component extrusion system are stored by multi-component extrusion instructions in conjunction with identification data for the extruder, for the extruded materials and the achieved multi-component mass flow m_{Gmess} or respectively the total profile, and the stored values for the rates of rotation of the individual extruders are set as desired rates of rotation at the beginning of a new multi-component extrusion instruction having the same multi-component composition and the same distribution of the individual components over the individual extruders and at least substantially the same multi-component mass flow m_{G} or total profile respectively.

4. Method according to the features of claim 2 or 3, wherein the total mass flow m_{Gmes} or respectively the total profile is determined, at the beginning of an extruder instruction, and the values for pressure Pᵢₛₜ and temperature Tᵢₛₜ are respectively determined if there is conformity with the desired values at a plurality of prescribed locations in at least one individual extruder, and averaged values for pressure P_{ist mit} are calculated from the determined values for pressure, and these averaged values are compared with known desired values P_{soll Mit,} Tₛₒₗₗ, which are expected for the material to be extruded at the set rate of rotation of this extruder and at the set multi-component extrusion value, in order to check that the material, actually situated in the extruder, is identical to the desired material prescribed for said extruder.

5. Method according to the features of claim 4, wherein the determined values for the averaged pressure P_{ist Mit}, and the temperature Tᵢₛₜ, if the measured total mass flow m_{Gist} is identical to the desired total mass flow m_{Gsoll}, are associated with already known material-typical values of averaged pressure Pₘᵢₜ and known materials in this extruder when the mould, situated in the extruder, is used to ascertain the material situated in the extruder.

6. Method, more especially according to one or more of claims 2 to 5, for regulating the screw rates of rotation for individual extruders, wherein the mass flow of an individual extruder is changed if there is a deviation in a measured parameter, width and/or weight of the profile moulded by extrusion, by varying a screw rate of rotation or system speed, by means of a control means and/or regulating unit, until the desired value for this parameter is reached.

## Revendications

1. Extrudeuse (1) à plusieurs composants pour la production de profilés (23) à plusieurs composants, à partir de matières thermoplastiques et/ou d'autres matières à viscosité intrinsèque, en particulier pour des profilés en caoutchouc, laquelle extrudeuse comprend au moins deux extrudeuses individuelles (2, 3, 4) produisant à chaque fois des composants individuels,
**1.1** où chaque extrudeuse individuelle comprend un carter (7) doté d'un espace pour recevoir de la matière thermoplastique à extruder et/ou une autre matière à viscosité intrinsèque, extrudeuse individuelle dans laquelle un arbre d'extrudeuse (8) est logé en rotation, lequel arbre d'extrudeuse est en relation fonctionnelle active, au moins lors de l'extrusion, avec des moyens d'entraînement commandés pour déclencher la rotation de la vis de l'extrudeuse dans ses paliers,
**1.1.1** comprenant à chaque fois une filière d'extrusion à travers laquelle, lors de la rotation de la vis de l'extrudeuse, la matière à extruder est pressée et, ainsi, profilée comme un flux massique continu mᵢ, hors du carter de l'extrudeuse individuelle,
**1.2** où les filières d'extrusion des extrudeuses individuelles sont disposées dans une tête d'injection commune (5), de façon telle que leurs flux massiques mᵢ se réunissent en un flux massique global, dans une zone de confluence, en formant un profilé (23) à plusieurs composants constitué des profilés individuels (33, 34, 35, 36),
**1.3** comprenant des moyens pour effectuer la mesure, en continu, du flux massique global m_{Gmesuré} ou du profilé global, en aval de la zone de confluence,
**1.4** comprenant des moyens pour calculer la pression et la température à l'intérieur de chaque extrudeuse individuelle,
**1.5** comprenant un dispositif de commande (27) servant au réglage indépendant de la vitesse de rotation nᵢ de chaque extrudeuse individuelle correspondant aux valeurs théoriques prédéterminées n_{ithéorique} en fonction de la valeur théorique du flux massique global m_{G}, en fonction des composants de matière à transformer et en fonction des filières d'extrusion, et servant au réglage des vitesses de rotation réelles n_{iréelles} lorsque l'on constate des écarts du flux massique global mesuré m_{Gmesué} ou du profilé global, par rapport à la valeur théorique du flux massique global m_{Gthéroique} correspondant à des écarts calculés des valeurs de pression P_{mesurée} et de température T_{mesurée} mesurées à chaque fois dans les extrudeuses individuelles, par rapport à la valeur théorique respective de pression P_{théorique} et de température T_{théorique},
**1.6** où, concernant l'extrudeuse à plusieurs composants, dans le cas d'un écart de la valeur réelle du flux massique m_{G} de plusieurs composants, ayant été calculée, ou du profilé global, le flux massique de l'extrudeuse individuelle, dans laquelle les valeurs calculées de pression et de température P_{mesurée} et T_{mesurée} s'écartent des valeurs théoriques de pression P_{théorique} et de température T_{théorique} de cette extrudeuse, est ajusté par une modification, effectuée en continu, de la vitesse de rotation.

2. Procédé de régulation de la composition d'un flux massique continu m_{G} de plusieurs composants, ou d'un profilé global, produit dans une extrudeuse à plusieurs composants, conformément à la revendication 1, par coextrusion d'au moins deux flux massiques de composants produits à chaque fois dans des extrudeuses individuelles de l'extrudeuse à plusieurs composants, procédé dans lequel, lors d'un écart de la valeur réelle du flux massique m_{G} de plusieurs composants, ou du profilé global, calculée en effectuant des mesures, le flux massique de l'extrudeuse individuelle, dans laquelle des valeurs moyennes de pression et de température s'écartent de valeurs théoriques moyennes de pression P_{théorique moyenne} et de valeurs théoriques de température T_{théorique} calculées à partir d'au moins deux points de mesure pour des valeurs de pression et de température pour au moins un point de mesure pour la température dans chaque extrudeuse, est ajusté de façon continue en modifiant la vitesse de rotation, pour la production des composants de profilés individuels.

3. Procédé selon les caractéristiques de la revendication 2, où les valeurs pour les vitesses de rotation régulées des extrudeuses individuelles d'une installation d'extrusion à plusieurs composants, concernant des applications d'extrusion à plusieurs composants, sont mémorisées en liaison avec des indications d'identification pour l'extrudeuse, pour les matières extrudées et en liaison avec le flux massique obtenu m_{Gmesuré} de plusieurs composants, ou en liaison avec le profilé global, et, au début d'une nouvelle application d'extrusion de plusieurs composants ayant la même composition à plusieurs composants et ayant la même répartition des composants individuels sur les extrudeuses individuelles et, dans le cas au moins d'un flux massique m_{G}, pratiquement identique, de plusieurs composants, ou du profilé global, les valeurs mémorisées pour les vitesses de rotation des extrudeuses individuelles sont réglées comme des vitesses de rotation théoriques.

4. Procédé selon les caractéristiques de la revendication 2 ou 3, où, au début d'une application d'extrusion, le flux massique global m_{Gmesuré} ou du profilé global, est calculé et, lors d'une conformité avec les valeurs théoriques au niveau de plusieurs emplacements prédéterminés dans au moins une extrudeuse individuelle, à chaque fois les valeurs de pression P_{réelle} et de température T_{réelle} sont calculées et, à partir des valeurs calculées pour la pression, des valeurs moyennes pour la pression P_{réelle moyenne} sont calculées, et ces valeurs sont comparées à des valeurs théoriques de pression P_{théorique moyenne} et de température T_{théorique} attendues pour la matière à extruder, dans le cas de la vitesse de rotation réglée de cette extrudeuse et dans le cas de la valeur d'extrusion à plusieurs composants, ayant été réglée, afin de procéder au contrôle de l'identité de la matière se trouvant réellement dans l'extrudeuse, avec la matière théorique prédéterminée pour cette extrudeuse.

5. Procédé selon les caractéristiques de la revendication 4, au cours duquel il se produit une affectation des valeurs calculées pour la pression moyenne P_{réelle moyenne} et pour la température T_{réelle} lors de l'identité du flux massique global mesuré m_{Gréel} avec le flux massique global théorique m_{Gthéorique}, à des valeurs déjà connues, caractéristiques des matériaux, de pression P_{moyenne} et de matières connues dans cette extrudeuse, lors de l'utilisation du profil se trouvant dans l'extrudeuse, pour la constatation de la matière se trouvant dans l'extrudeuse.

6. Procédé, en particulier selon l'une quelconque ou plusieurs des revendications 2 à 5, pour le réglage des vitesses de rotation de la vis des extrudeuses individuelles, où le flux massique d'une extrudeuse individuelle, lors d'un écart d'une variable mesurée, d'une largeur mesurée et/ou d'un poids mesuré du profilé formé par extrusion, cet écart étant dû à la vitesse de rotation de la vis ou à une modification de la vitesse de l'installation, est modifié au moyen d'une unité de commande et/ou de réglage, jusqu'à ce que la valeur théorique de cette variable soit atteinte.
